# DEMANDE DE BREVET EUROPEEN

(11) **EP 1 202 022 A1**
(43) Date de publication de la demande: **02.05.2002**
(21) Numéro de dépôt: 00203677.0
(22) Date de dépôt: 24.10.2000
(51) Int. Cl.: G01B 1/00

(54) **Stylet pour palpeur de mesure**

(71) Demandeur: Saphirwerk Industrieprodukte AG, 2555 Brügg (CH)
(72) Inventeur: Baebler, Jean, 1700 Fribourg (CH); Dubois, Daniel, 2503 Bienne (CH); Rieger, Wolfhart, 8263 Buch (CH); Zwirner, Eckhard, 1588 Cudrefin (CH)
(74) Mandataire: Ravenel, Thierry Gérard Louis

(57) **Abrégé**

L'invention concerne un stylet de mesure (1) comportant une tige de soutien (4) portant à une première extrémité (5) un élément de contact (6), et à la deuxième extrémité (3) des moyens de connexion (2) pour tête de mesure, caractérisé en ce que l'élément de contact (6) est réalisé en une céramique comportant des particules électriquement conductrices.

## Description

La présente invention concerne généralement le domaine des palpeurs et notamment un stylet pour palpeur, destiné à être utilisé dans le domaine de la métrologie. Plus particulièrement, l'invention concerne un stylet du type comportant une tige de soutien dont l'extrémité porte un élément de contact, la tige étant destinée à être fixée à une tête de mesure.

Généralement, ce type de palpeurs est utilisé pour la mesure de dimensions, de rugosité ou de régularité de forme d'objets, typiquement avec des incertitudes de mesures de l'ordre de 0,1 à 1,5 micromètre (µm). Etant donnée la précision exigée pour ces mesures, ces palpeurs doivent remplir certaines exigences techniques. Ils doivent notamment comprendre une tige de soutien d'une grande rigidité et un élément de contact d'une dureté élevée. En effet, une élasticité trop élevée des matériaux employés pour ces éléments engendre inévitablement des déformations inacceptables du stylet pendant la mesure, conduisant à des erreurs de mesure qu'il convient d'éliminer. Typiquement, les éléments de contact sont réalisés en rubis ou en saphir et la tige de soutien en carbure de tungstène.

Dans le domaine plus particulier des mesures dynamiques, les palpeurs doivent répondre à une exigence supplémentaire qui concerne la masse des stylets utilisés. En effet, ces stylets doivent être légers pour permettre des déplacements rapides lors de ces mesures, et assurer des résultats de mesure suffisamment précis.

Le brevet suisse No 644 688 décrit un stylet de ce type et dont au moins la tige de soutien est réalisée en céramique à base d'alumine. La céramique est un matériau qui présente une grande dureté pour une densité relativement faible. De plus, elle présente une bonne stabilité thermique, ce qui est indispensable pour permettre son utilisation dans le domaine du palpage dynamique. La faible valeur de son coefficient de dilatation thermique lui permet en outre d'absorber l'énergie thermique issue des frottements importants qui ont lieu pendant les mesures.

Toutefois la demanderesse, en ayant recours à cette solution, s'est rendue compte d'une diminution progressive de la précision de mesure au cours du temps. La demanderesse a pu mettre en évidence qu'en plus de donner lieu à une dissipation d'énergie thermique, les frottements intervenant au cours des mesures dynamiques donnaient lieu à un phénomène de création de charges électrostatiques à la surface de l'élément de contact. Ces charges électrostatiques sont créées lors du frottement de l'élément de contact avec l'objet examiné. Lorsque l'élément de contact est réalisé en saphir, en rubis ou en céramique, les charges électrostatiques créées se répartissent sur sa surface en raison du caractère fortement électrisable des matériaux précités et engendrent un faible champ électrostatique autour de l'élément de contact. Le mouvement du palpeur à la surface de l'objet examiné provoque l'arrachement de fragments de matière qui s'accumulent progressivement autour de l'élément de contact, en étant retenus par le champ électrostatique. Après quelques dizaines de mètres parcourus, ces fragments forment une couche parasite d'épaisseur irrégulière pouvant atteindre 1 µm par endroits. Une telle couche n'est bien sûr pas souhaitable car elle modifie la géométrie de l'élément de contact et dégrade la précision des mesures, cette dégradation s'amplifiant avec le temps. Cette couche provoque donc une inefficacité prématurée des stylets conduisant l'utilisateur à les changer fréquemment avec des répercussions économiques importantes.

La présente invention a donc pour but principal de pallier les inconvénients de l'art antérieur susmentionné en fournissant un stylet comportant un élément de contact qui est dur, léger, qui évite la formation d'une couche parasite, en permettant ainsi d'augmenter la durée de vie du stylet.

A cet effet, l'invention a pour objet un stylet de mesure comportant une tige de soutien portant à une première extrémité un élément de contact, et à la deuxième extrémité des moyens de connexion pour une tête de mesure, caractérisé en ce que l'élément de contact est réalisé en une céramique comportant des particules électriquement conductrices.

Grâce à ces caractéristiques, les charges électriques engendrées par les frottements de l'élément de contact avec l'objet à mesurer ne se répartissent pas sur la surface de l'élément de contact mais sont dispersées à l'intérieur des régions conductrices de ce dernier. La formation de la couche parasite est alors évitée, ce qui permet d'obtenir une meilleure précision sur les mesures.

Selon un premier mode de réalisation, les particules sont réparties uniformément dans le volume de l'élément de contact.

Selon un deuxième mode de réalisation lesdites particules sont comprises dans une couche située à la surface dudit élément de contact.

L'invention sera mieux comprise à l'aide de la description suivante d'un exemple d'exécution, en référence aux dessins annexés dans lesquels :
- la figure 1 représente une vue en perspective d'un stylet selon l'invention;
- la figure 2 représente une vue en coupe d'un stylet selon un premier mode de réalisation de l'invention;
- la figure 3 représente une vue en coupe d'un stylet selon un deuxième mode de réalisation, et
- la figure 4 montre des courbes comparatives représentatives de la sphéricité d'un élément de contact sphérique respectivement selon l'art antérieur et selon la présente invention.

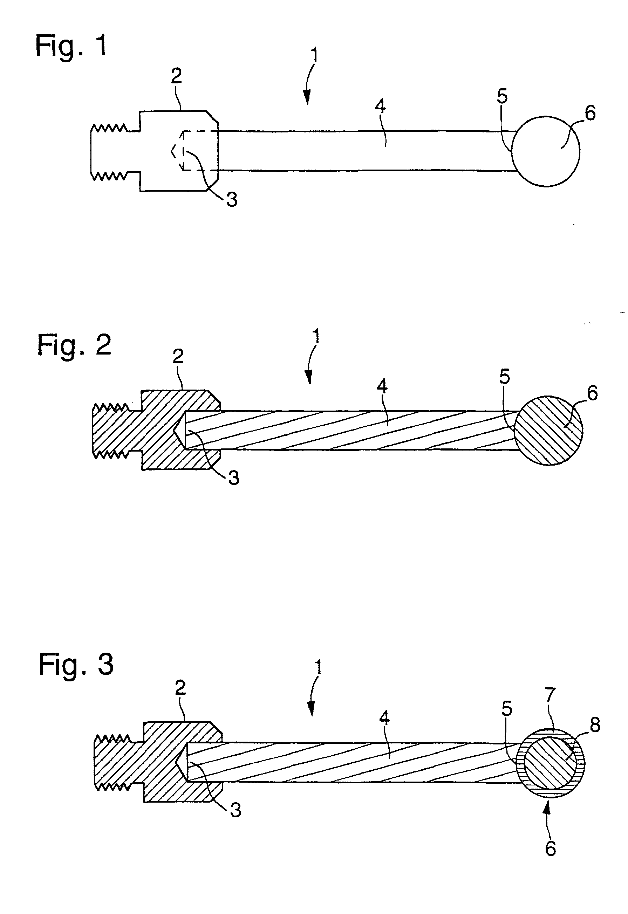

On a représenté à la figure 1 un stylet, désigné par la référence générale 1, destiné à équiper une tête de mesure (non représentée) pour la mesure tactile notamment de dimensions, de forme ou analogues. Le stylet 1 comporte une pièce de connexion 2 fixée à une première extrémité 3 d'une tige de soutien 4. Cette pièce de connexion 2, qui permet de fixer le stylet 1 à la tête de mesure, est typiquement fixée sur l'extrémité 3 par chassage, soudage ou tout autre moyen approprié. La tige 4 porte à son extrémité opposée 5 un élément de contact 6, destiné à venir en contact avec les objets à mesurer ou à examiner. La forme sphérique de l'élément de contact 6 représenté à la figure 1 n'est bien entendu pas limitative et toute autre forme peut être envisagée.

La demanderesse a réussi à mettre en évidence la formation d'un faible champ électrostatique, entraînant la création d'une couche de dépôts parasites autour de l'élément de contact 6 à l'usage, lorsque celui-ci est réalisé conformément à l'art antérieur. Conformément à l'invention et pour éliminer la formation de cette couche parasite, l'élément de contact 6 est réalisé en un matériau céramique comportant des particules électriquement conductrices. Les quantités de particules doivent être suffisantes pour permettre la dispersion des charges électrostatiques, engendrées lors des frottements de l'élément de contact 6 avec la pièce à examiner, à l'intérieur des régions conductrices dudit élément de contact et limiter la valeur du champ électrostatique local, donc son effet perturbateur.

Les matériaux de base auxquels on ajoute des particules conductrices pour réaliser des céramiques conductrices selon l'invention sont choisis parmi l'ensemble comprenant notamment les oxydes métalliques, les nitrures, les borures, et les carbures qui présentent de préférence une dureté Vickers supérieure à 1200 HV20 et une densité inférieure à 15.0 g.cm⁻³.

Les particules conductrices sont choisies parmi l'ensemble comprenant les carbures, nitrures, carbonitrures, borures, oxydes et les siliciures des métaux du quatrième au sixième groupe du tableau des éléments.

Selon un premier mode de réalisation (figure 2), les particules sont dispersées dans la masse de la céramique, c'est-à-dire dans le volume de l'élément de contact 6. Typiquement, la quantité de particules présente dans la céramique doit permettre à celle-ci d'atteindre une conductivité électrique supérieure à 10² Ohm⁻¹.cm⁻¹, et de préférence de l'ordre de 10³ Ohm⁻¹.cm⁻¹ sans diminuer la dureté de l'élément de contact qui doit présenter une dureté Vickers supérieure à 1200 HV20. Il est bien entendu que la quantité de particules nécessaire pour atteindre une telle conductivité électrique dépend de leur nature.

A titre d'exemple, l'élément de contact 6 peut être formé d'un oxyde de zirconium mélangé à des particules de carbure de titane, ces dernières représentant environ 30% en masse de l'élément de contact. Dans ce cas la dureté est d'environ 1700 HV20 et la conductivité électrique est de 10³ Ohm⁻¹.cm⁻¹. Un tel élément de contact peut être fabriqué selon un procédé classique de frittage de céramiques.

Selon un deuxième mode de réalisation (figure 3), les particules sont comprises dans une couche 7 située à la surface dudit élément de contact 6. En d'autres termes, la couche 7 enveloppe un noyau 8 réalisé en céramique. Cette couche 7 est déposée sous forme d'une couche continue, par exemple par évaporation sous vide ou par traitement au plasma, et permet avantageusement de remplir les pores de la surface du noyau 8. La couche 7 présente une épaisseur comprise entre 0.1 et 10 µm et de préférence de l'ordre de 2 à 5 µm. Dans ce mode de réalisation, les particules utilisées pour former la couche 7 lui confèrent une dureté sensiblement égale ou supérieure à celle du noyau, c'est-à-dire une dureté Vickers supérieure à 1200 HV20 et typiquement de l'ordre de 2500 HV20, et une conductivité électrique supérieure à 10² Ohm⁻¹.cm⁻¹, et typiquement de l'ordre de 10³ Ohm⁻¹.cm⁻¹, pour favoriser la dispersion des charges électrostatiques dans la couche 7.

Selon une variante avantageuse des deux modes de réalisation ci-dessus, la tige de soutien 3 est également réalisée en un matériau électriquement conducteur, et de préférence en un matériau identique à celui utilisé pour réaliser l'élément de contact 6 selon l'un ou l'autre des modes de réalisation précédemment décrits. Dans ce cas, et pour que les charges électrostatiques se répartissent dans l'ensemble des régions conductrices du stylet, les moyens de liaison de la tige de soutien avec l'élément de contact seront également réalisés en un matériau conducteur. Typiquement, ces moyens de liaison pourront être formés d'un joint de colle conductrice ou encore d'un joint de soudure.

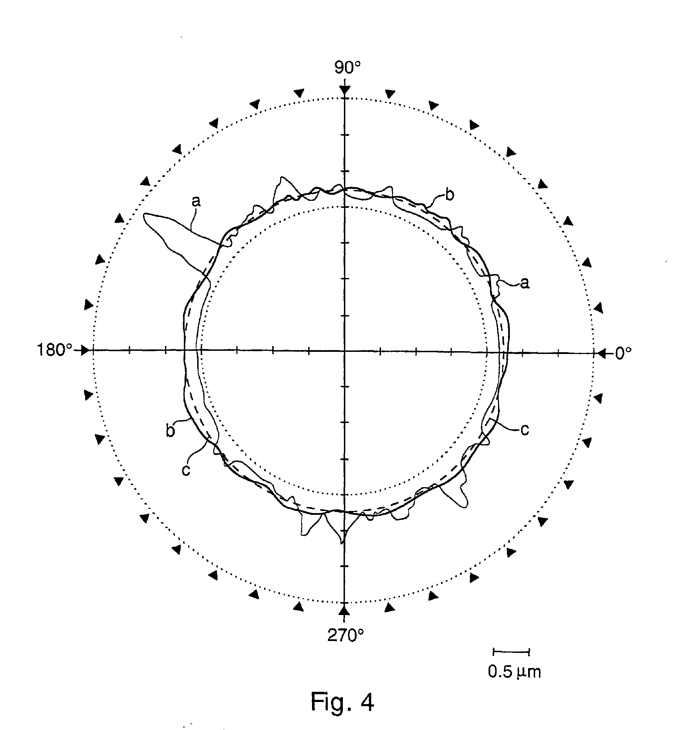

On montre ci-après en liaison avec la figure 4, la déviation de sphéricité de l'élément de contact observée, pour deux exemples de stylets réalisés respectivement selon l'art antérieur et selon l'invention, tous deux comportant des éléments de contact sphériques de même rayon initial. Par déviation de sphéricité on entend la variation moyenne du rayon de la sphère après une utilisation de référence. Cette utilisation de référence est exprimée en mètres parcourus par l'élément de contact, sur une surface étalon d'un objet à examiner. L'exemple 1 correspond à un stylet réalisé conformément à l'art antérieur, tandis que l'exemple 2 correspond à un stylet réalisé selon un mode de réalisation de l'invention.

### Exemple 1 (stylet selon l'art antérieur) :

On a utilisé un palpeur dont la tête de mesure est sphérique et correspond initialement à la courbe C. Cette tête de mesure a été réglée de sorte à exercer une force de palpage de 2 Newtons sur l'objet à examiner, celui-ci étant formé d'un alliage à base d'aluminium. L'élément de contact, conformément à l'art antérieur est formé d'une bille de rubis synthétique, et comporte une déviation initiale de sphéricité égale ou inférieure à 0,130 µm. La mesure a consisté à faire parcourir à l'élément de contact une distance d'environ 100 mètres sur la surface étalon de l'objet examiné. On a alors effectué une nouvelle mesure de la déviation de sphéricité de l'élément de contact, et obtenu une valeur de 1,325 µm (courbe a), liée à l'épaisseur de la couche formée autour dudit élément de contact. A titre indicatif, l'épaisseur maximale de la couche mesurée au niveau de l'équateur de l'élément de contact est de 1,000 µm.

### Exemple 2 (stylet selon l'invention) :

La mesure réalisée dans cet exemple est la même que dans l'exemple précédent, à la différence près que l'élément de contact a été réalisé conformément à l'invention, c'est-à-dire en une céramique électriquement conductrice. Plus précisément, le matériau utilisé est constitué d'un alliage contenant de l'oxyde de zirconium à 69 %, et du carbure de titane à 31 %. La déviation de sphéricité de l'élément de contact 6 est la même avant utilisation que dans l'exemple 1, et la force de palpage de la tête de mesure est également de 2 Newtons. On obtient dans ce cas un meilleur résultat puisque la déviation de sphéricité de l'élément de contact, après avoir parcouru les 100 mètres, n'est plus que de 0,154 µm (courbe b), tandis que l'épaisseur maximale de la couche mesurée au niveau de l'équateur de l'élément de contact est de 0,012 µm.

La description qui précède correspond à des modes de réalisation préférés de l'invention et ne saurait en aucun cas être considérée comme limitative.

## Revendications

1. Stylet de mesure (1) comportant une tige de soutien (4) portant à une première extrémité (5) un élément de contact (6), et à la deuxième extrémité (3) des moyens de connexion (2) pour une tête de mesure, **caractérisé en ce que** l'élément de contact (6) est réalisé en une céramique comportant des particules électriquement conductrices.

2. Stylet de mesure selon la revendication 1, **caractérisé en ce que** lesdites particules sont réparties uniformément dans le volume dudit élément de contact (6).

3. Stylet de mesure selon la revendication 1, **caractérisé en ce que** lesdites particules sont comprises dans une couche (7) située à la surface dudit élément de contact (6).

4. Stylet de mesure selon la revendication 3, **caractérisé en ce que** ladite couche (7) présente une épaisseur comprise entre 0.1 et 10 µm.

5. Stylet de mesure selon l'une quelconque des revendications précédentes, **caractérisé en ce que** lesdites particules sont choisies parmi l'ensemble comprenant les carbures, nitrures, carbonitrures, borures, oxydes et siliciures des métaux du quatrième au sixième groupe du tableau des éléments.

6. Stylet de mesure selon l'une quelconque des revendications précédentes, **caractérisé en ce que** ladite céramique conductrice présente une conductivité électrique supérieure à 10² Ohm⁻¹.cm⁻¹.

7. Stylet de mesure selon l'une quelconque des revendications précédentes, **caractérisé en ce que** ladite céramique conductrice présente une dureté supérieure à 1200 HV20 Vickers.

8. Stylet de mesure selon l'une quelconque des revendications précédentes, **caractérisé en ce que** ladite céramique conductrice présente une densité inférieure à 15.0 g.cm⁻³.

9. Stylet de mesure selon l'une quelconque des revendications précédentes, **caractérisé en ce que** ledit élément de contact (6) est fixé à la tige de soutien (4) par des moyens de liaison électriquement conducteurs et **en ce que** ladite tige de soutien (4) est également réalisée en un matériau électriquement conducteur.
